# EUROPÄISCHE PATENTSCHRIFT

(11) **EP 3 609 840 B1**
(45) Veröffentlichungstag und Bekanntmachung des Hinweises auf die Patenterteilung: **09.06.2021**
(21) Anmeldenummer: 18717343.0
(22) Anmeldetag: 11.04.2018
(51) Int. Cl.: C01C 3/16

(54) **LAGERSTABILE CYANAMID-HALTIGE LÖSUNGEN**
STORAGE-STABLE SOLUTIONS CONTAINING CYANAMIDE
SOLUTIONS CONTENANT DE LA CYANAMIDE STABLES AU STOCKAGE

(30) Priorität: 15.04.2017 DE 102017003691
(43) Veröffentlichungstag der Anmeldung: 19.02.2020
(73) Patentinhaber: AlzChem Trostberg GmbH, 83308 Trostberg (DE)
(72) Erfinder: GÜTHNER, Thomas, 83308 Trostberg (DE); SANS, Jürgen, 83308 Trostberg (DE); BEZLER, Jürgen, 84489 Burghausen (DE); EBERL, Martin, 84494 Niederbergkirchen (DE); MARTINEZ, José, 83278 Traunstein (DE)
(74) Vertreter: Weickmann & Weickmann PartmbB
(86) Internationale Anmeldenummer: PCT/EP2018/059257
(87) Internationale Veröffentlichungsnummer: WO 2018/189227

(56) Entgegenhaltungen:
- JP-A- 2000 204 007
- US-A- 4 126 664
- US-A- 4 562 289
- US-A- 6 054 411

## Beschreibung

Die vorliegende Erfindung betrifft wässrige Cyanamid-haltige Lösungen, insbesondere lagerstabile wässrige Cyanamid-haltige Lösungen, die einen Stabilisator und ein Tensid enthalten.

Wässrige Cyanamid-Lösungen haben vielfältige Einsatzbereiche. Als Rohstoff für chemische Synthesen dienen sie zur Herstellung von Guanidinen, Thioharnstoffen, Isoharnstoff-Derivaten, N-Cyanimiden und heterocyclischen Verbindungen wie z.B. Pyrimidinen, 1,3,5-Triazinen, Imidazolen, 1,2,4-Triazolen und Tetrazolen. Im landwirtschaftlichen Bereich kommen wässrige Cyanamid-Lösungen als Biozid, als Wachstumsregulator bzw. als dormanzbrechendes Phytohormon zum Einsatz. In Wasch- und Reinigungsmitteln sowie bei der Zellstoffbleiche werden wässrige Cyanamid-Lösungen als Bleichaktivator für Peroxide eingesetzt.

Handelsübliche Cyanamid-Lösungen werden heute in großen Mengen in Form einer wässrigen Lösung, meist im Konzentrationsbereich um 50 Gew.-%, angeboten. Zudem wird Cyanamid als Feststoff mit ca. 99 %-igem Gehalt vermarktet.

Wässrige Cyanamid-Lösungen haben eine begrenzte Lagerstabiltät, da abhängig von ihrem pH-Wert und ihrer Konzentration sowohl eine Dimerisation zu Dicyandiamid (N-Cyanoguanidin) als auch eine Hydratation zu Harnstoff und weiter zu Ammoniumcarbamat bzw. Ammoniumcarbonat auftritt. Zur Verzögerung dieser unerwünschten Reaktionen wurden bereits verschiedene Stabilisierungsmittel vorgeschlagen. Beispielsweise wurden Alkoxyethylacetate (vgl. US 3295926), Borsäure (vgl. SU 122742), Carbonsäureester wie z.B. Ethylformiat (vgl.

DE 2642023) oder Diammoniumphosphat (vgl. JP 10203824) als Stabilisierungsmittel vorgeschlagen. Im technischen Bereich hat sich ein Stabilisatorsystem auf Basis von anorganischen Phosphaten bewährt (vgl. Kirk-Othmer, Encyclopedia of Chemical Technology, 3rd edition 1979, Vol.7, page 297).

US 6,054,411 beschreibt die Zugabe von Dicarbonsäuren wie zum Beispiel Adipinsäure zu einer wässrigen Cyanamidlösung. US 4,562,289 beschreibt homogene, lagerstabile Lösungen von Cyanamid in einer Polyollösung, wobei das Polyol ein Molekulargewicht von 62 bis 12000 aufweist. JP 2000-204007 A beschreibt eine Lösung mit verbesserten Benetzungseigenschaften umfassen Cyanamid und eine wasserlösliche polymere Substanz, wie zum Beispiel kationisiertes Polyacrylamid oder kationisierte Carboxymethyl Cellulose.

Bei besonders hohen Anforderungen an die Stabilität kann zusätzlich ein System enthaltend anorganische oder organische Magnesiumsalze, insbesondere Magnesiumchlorid-Hexahydrat, eingesetzt werden (vgl. DE 3219054).

Leider ergeben die bekannten Stabilisierungssysteme für manche Anwendungen - insbesondere bei erforderlich längerer Lagerung in warmen Ländern - keine ausreichende Stabilität. Der Erfindung lag daher die Aufgabe zugrunde, ein weiter verbessertes Stabilisierungssystem für wässrige Cyanamid-Lösungen zu finden. Zudem ist es Aufgabe der vorliegenden Erfindung, eine lagerstabile Cyanamid-haltige Lösung zur Verfügung zu stellen, die in einer Vielzahl an Anwendungen, insbesondere in der Landwirtschaft zur Regulierung des Pflanzenwachstums, eingesetzt werden kann und deren Anwendung als unbedenklich für den Anwender eingestuft werden kann.

Erfindungsgemäß werden diese Aufgaben durch eine Zusammensetzung gemäß Anspruch 1 gelöst. Demnach ist eine Cyanamid-haltige Lösung Gegenstand der vorliegenden Erfindung, die umfasst:
a) 15 bis 60 Gew.-% Cyanamid,
b) 0,01 bis 4 Gew.-% eines Stabilisators enthaltend eine oder mehrere Verbindungen aus der Gruppe der Phosphor-haltigen Säuren oder deren Salze,
c) 0,01 bis 4 Gew.-% eines nichtionischen Tensids enthaltend eine oder mehrere Verbindungen aus der Gruppe der Ethoxylate gemäß Formel (I), der Fettalkoholglucoside gemäß Formel (II) oder Mischungen hiervon, wobei für Formel (I) und (II) gilt,

   R¹-O-(CH₂CH₂O)ₙ-H Formel (I)

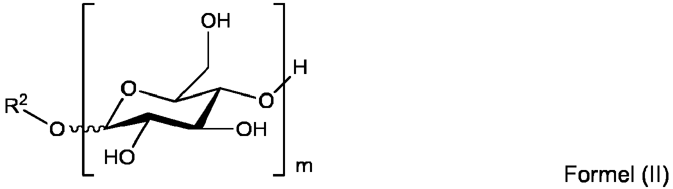

   wobei für die Reste R¹, R² und die Indizes n, m gleichzeitig oder unabhängig gilt:
   - R¹ =: eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
   - R² =: eine lineare oder verzweigte Alkyl- oder Alkenylgruppe mit 6 bis 24 Kohlenstoffatomen,
   - n =: eine Zahl von 2 bis 20,
   - m =: eine Zahl von 1 bis 5,
d) Rest Wasser,
wobei die Komponenten a) und c) in einem Gewichtsverhältnis Cyanamid zu nichtionischem Tensid im Bereich von 500 : 1 bis 5 : 1 vorliegen.

Gemäß einer bevorzugten Ausführung ist eine Cyanamid-haltige Lösung Gegenstand der vorliegenden Erfindung, die enthält:
a) 15 bis 60 Gew.-% Cyanamid,
b) 0,01 bis 4 Gew.-% eines Stabilisators enthaltend eine oder mehrere Verbindungen aus der Gruppe der Phosphor-haltigen Säuren oder deren Salze,
c) 0,01 bis 4 Gew.-% eines nichtionischen Tensids enthaltend eine oder mehrere Verbindungen aus der Gruppe der Ethoxylate gemäß Formel (I), der Fettalkoholglucoside gemäß Formel (II) oder Mischungen hiervon, wobei für Formel (I) und (II) gilt,

   R¹-O-(CH₂CH₂O)ₙ-H Formel (I)

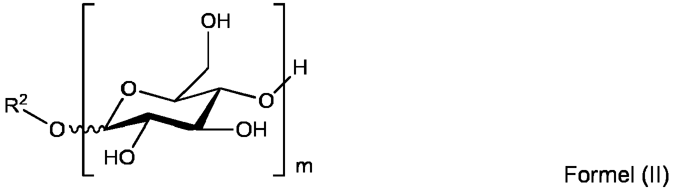

   wobei für die Reste R¹, R² und die Indizes n, m gleichzeitig oder unabhängig gilt:
   - R¹ =: eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
   - R² =: eine lineare oder verzweigte Alkyl- oder Alkenylgruppe mit 6 bis 24 Kohlenstoffatomen,
   - n =: eine Zahl von 2 bis 20,
   - m =: eine Zahl von 1 bis 5,
d) 0 bis 6 Gew.-% Dicyandiamid,
e) 0 bis 5 Gew.-% Formulierungshilfsstoff, und
f) Rest Wasser,
wobei die Komponenten a) und c) in einem Gewichtsverhältnis Cyanamid zu nichtionischem Tensid im Bereich von 500 : 1 bis 5 : 1 vorliegen.

Überraschender Weise hat sich gezeigt, dass erfindungsgemäße wässrige Cyanamid-Lösungen mit Zusatz eines nichtionischen Tensids eine gegenüber nicht Tensid-haltigen Lösungen deutlich verbesserte Lagerstabilität aufweisen. In diesem Zusammenhang hat sich gezeigt, dass der Abbau von Cyanamid in diesen Tensid-haltigen Lösungen im Vergleich zu bekannten Lösungen, die bekannte Stabilisatoren enthalten, in deutlich geringerem Umfang stattfindet. Somit stellen diese Tensid-haltigen Cyanamidlösungen eine technisch und wirtschaftlich verbesserte Stoffzusammensetzung dar. Insbesondere wässrige Cyanamid-Lösungen mit Zusatz eines nichtionischen Tensids aus der Gruppe der Ethoxylate gemäß Formel (I), der Fettalkoholglucoside gemäß Formel (II) oder Mischungen hiervon, zeigen eine deutlich verbesserte Lagerstabilität gegenüber nicht Tensid-haltigen Zusammensetzungen als auch gegenüber Cyanamid-haltigen Lösungen, die ein anionisches Tensid enthalten. Zudem hat sich herausgestellt, dass die Bildung von Dicyandiamid in erfindungsgemäßen wässrigen Cyanamid-Lösungen mit Zusatz eines nichtionischen Tensids aus der Gruppe der Ethoxylate gemäß Formel (I), der Fettalkoholglucoside gemäß Formel (II) oder Mischungen hiervon, deutlich gesenkt werden kann.

Erfindungsgemäße Cyanamid-haltige Lösungen können in einer Vielzahl an Anwendungen, insbesondere in der Landwirtschaft zur Regulierung des Pflanzenwachstums, eingesetzt werden. Zudem hat sich gezeigt, dass nichtionische Tenside hierfür uneingeschränkt zu verwenden sind. Es ist bekannt, dass nichtionische Tenside aus der Gruppe der Ethoxylate gemäß Formel (I), der Fettalkoholglucoside gemäß Formel (II) oder Mischungen hiervon, beispielsweise als Spreitmittel in der Landwirtschaft eingesetzt werden können. Nicht bekannt ist hingegen, dass diese Verbindungen einen stabilisierenden Effekt auf Cyanamid-haltige Lösungen ausüben. Insbesondere ist nicht bekannt, dass diese Tenside gegenüber für Cyanamid-haltige Lösungen bekannten Stabilisator-Systemen einen zusätzlichen stabilisierenden Effekt zeigen. Diese Tatsachen sind in der Gesamtbetrachtung vollkommen überraschend und nicht vorhersehbar.

Dabei umfasst oder enthält eine erfindungsgemäße Cyanamid-haltige Lösung mindestens 15 Gew.-% Cyanamid. Wesentlich ist hierbei, dass das Cyanamid (CH₂N₂, CAS-Nr. 420-04-2) als solches und nicht als Salz eingesetzt wird.

Besonders bevorzugt umfasst oder enthält eine erfindungsgemäße Cyanamid-haltige Lösung mindestens 20 Gew.-% Cyanamid, weiter bevorzugt mindestens 25 Gew.-% Cyanamid, weiter bevorzugt mindestens 30 Gew.-% Cyanamid und ganz besonders bevorzugt mindestens 35 Gew.-% Cyanamid. Gleichzeitig oder unabhängig hiervon kann die Cyanamid-haltige Lösung erfindungsgemäß Cyanamid bis zu einer Menge von 60 Gew.-%, bevorzugt bis zu einer Menge von 52 Gew.-%, weiter bevorzugt bis zu einer Menge von 45 Gew.-% und ganz besonders bevorzugt bis zu einer Menge von 42 Gew.-% umfassen oder enthalten. Besonders bevorzugt umfasst oder enthält die Cyanamid-haltige Lösung 30 bis 60 Gew.-% Cyanamid und ganz besonders bevorzugt 35 bis 52 Gew.-% Cyanamid. Somit können Cyanamid-haltige Lösungen bereitgestellt werden, die lagerstabil sind, und die gleichzeitig den vorherrschenden Regularien für den Transport von Cyanamid-haltigen Lösungen entsprechen.

Erfindungswesentlich umfasst oder enthält eine Cyanamid-haltige Lösung gemäß der vorliegenden Erfindung ein nichtionisches Tensid enthaltend eine oder mehrere Verbindungen aus der Gruppe der Ethoxylate gemäß Formel (I), der Fettalkoholglucoside gemäß Formel (II) oder Mischungen hiervon, wobei für die Reste R¹, R² und die Indizes m, n gleichzeitig oder unabhängig gilt:
- R¹ =: eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
- R² =: eine lineare oder verzweigte Alkyl- oder Alkenylgruppe mit 6 bis 24 Kohlenstoffatomen
- n =: eine Zahl von 2 bis 20,
- m =: eine Zahl von 1 bis 5.

Im Zusammenhang mit der vorliegenden Erfindung soll dabei unter einer linearen oder verzweigten Alkylgruppe mit 6 bis 24 Kohlenstoffatomen, eine Alkylgruppe verstanden sein, die in Summe 6 bis 24 Kohlenstoffatome aufweist, und die insbesondere die allgemeine Formel CₙH₂ₙ₊₁ aufweist, wobei n = eine ganze Zahl von 6 bis 24 bedeutet.

Dabei ist bevorzugt vorgesehen, dass R¹ und/ oder R² für eine lineare Alkylgruppe ausgewählt aus der Gruppe n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosanyl, n-Heneicosanyl, n-Docosanyl, n-Tricosanyl oder n-Tetracosanyl steht. Diese linearen Alkylgruppen können ihrerseits mit einer oder mehreren Alkylgruppen substituiert sein, so dass verzweigte Alkylgruppen resultieren. Damit kann gemäß einer weiteren, bevorzugten Ausführung R¹ und/ oder R² auch für eine verzweigte Alkylgruppe ausgewählt aus der Gruppe n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptdecyl, n-Octdecyl, n-Nonadecyl, n-Eicosanyl, n-Heineicosanyl, n-Docosanyl, n-Tricosanyl oder n-Tetracosanyl stehen, wobei diese Gruppen ihrerseits mit einer oder mehreren C1- bis C12-Alkylgruppen substituiert sind, wobei C1- bis C12-Alkyl weiterhin bevorzugt Methyl, Ethyl, n-Propyl, n-Butyl, n-Pentyl, n-Hexyl, n-Heptyl, n-Octyl, n-Nonyl, n-Decyl, n-Undecyl oder n-Dodecyl bedeuten kann.

Bevorzugt werden als Reste R¹ und/ oder R² lineare Alkylgruppen mit 8 bis 18 Kohlenstoffatomen, insbesondere geradzahlige, lineare Alkylgruppen mit 8 bis 18 Kohlenstoffatomen, speziell auch im Gemisch untereinander, so wie sie aus natürlichen Fetten gewonnen werden können.

Alternativ bevorzugt ist im Umfang der vorliegenden Erfindung auch vorgesehen, dass R¹ und/ oder R² für eine verzweigte Alkylgruppe mit 8 bis 18 Kohlenstoffatomen, insbesondere eine ungeradzahlige, verzweigte Alkylgruppe mit 8 bis 18 Kohlenstoffatomen steht.

Im Zusammenhang mit der vorliegenden Erfindung soll dabei unter einer linearen oder verzweigte Alkylgruppe mit 8 bis 18 Kohlenstoffatomen, eine Alkylgruppe verstanden sein, die in Summe 8 bis 18 Kohlenstoffatome aufweist, und die insbesondere die allgemeine Formel CₙH₂ₙ₊₁ aufweist, wobei n = eine ganze Zahl von 8 bis 18 bedeutet.

Somit bedeutet R¹ und/ oder R² bevorzugt n-Octyl, n-Nonyl, n-Decyl, n-Undecyl, n-Dodecyl, n-Tridecyl, n-Tetradecyl, n-Pentadecyl, n-Hexadecyl, n-Heptadecyl und n-Octadecyl. Besonders bevorzugt bedeutet R¹ und/oder R² n-Octyl, n-Decyl, n-Dodecyl, n-Tetradecyl, n-Hexadecyl und n-Octadecyl.

Alternativ bevorzugt bedeutet R¹ und/ oder R² somit n-Heptyl, n-Octyl, n-Nonyl, n-Decyl, n-Undecyl, n-Dodecyl, n-Tridecyl, n-Tetradecyl, wobei diese Gruppen ihrerseits mit einer oder mehreren C1- bis C5-Alkylgruppen substituiert sind, wobei C1- bis C5-Alkyl weiterhin bevorzugt Methyl, Ethyl, n-Propyl, n-Butyl oder n-Pentyl bedeuten kann. Besonders bevorzugt bedeutet R¹ und/ oder R² n-Octyl, n-Decyl oder n-Dodecyl, wobei diese Gruppen ihrerseits einfach oder mehrfach Methyl oder n-Propyl substituiert sind.

R¹ und/oder R² können weiterhin eine lineare oder verzweigte Alkenylgruppe mit 6 bis 24 Kohlenstoffatomen darstellen, wobei eine solche Alkenylgruppe wenigstens eine Doppelbindung aufweist.

Im Zusammenhang mit der vorliegenden Erfindung soll unter einer linearen oder verzweigten Alkenylgruppe mit 6 bis 24 Kohlenstoffatomen insbesondere eine Alkenylgruppe verstanden sein, die i) in Summe 6 bis 24 Kohlenstoffatome und eine Doppelbindung aufweist, und die insbesondere die allgemeine Formel CₙH₂ₙ₋₁ aufweist, wobei n = eine ganze Zahl von 6 bis 24 bedeutet, oder die ii) in Summe 6 bis 24 Kohlenstoffatome und zwei Doppelbindungen aufweist, und die insbesondere die allgemeine Formel CₙH₂ₙ₋₃ aufweist, wobei n = eine ganze Zahl von 6 bis 24 bedeutet, oder die iii) in Summe 6 bis 24 Kohlenstoffatome und drei Doppelbindungen aufweist, und die insbesondere die allgemeine Formel CₙH₂ₙ₋₅ aufweist, wobei n = eine ganze Zahl von 6 bis 24 bedeutet. Diese Alkenylgruppen können linear, somit nicht verzweigt, oder verzweigt sein.

Dabei ist insbesondere vorgesehen, dass R¹ und/ oder R² eine lineare Alkenylgruppe ausgewählt aus der Gruppe Hexenyl, Heptenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Eicosenyl, Hexadienyl, Heptadienyl, Octadienyl, Nonadienyl, Decadienyl, Undecadienyl, Dodecadienyl, Tridecadienyl, Tetradecadienyl, Pentadecadienyl, Hexadecadienyl, Heptadecadienyl, Octadecadienyl, Nonadecadienyl, Eicosadienyl, Hexatrienyl, Heptatrienyl, Octatrienyl, Nonatrienyl, Decatrienyl, Undecatrienyl, Dodecatrienyl, Tridecatrienyl, Tetradecatrienyl, Pentadecatrienyl, Hexadecatrienyl, Heptadecatrienyl, Octadecatrienyl, Nonadecatrienyl oder Eicosatrienyl bedeutet. Diese linearen Alkenylgruppen können ihrerseits mit einer oder mehreren Alkylgruppen oder Alkenylgruppen substituiert sein, so dass verzweigte Alkenylgruppen resultieren. Damit kann gemäß einer weiteren, bevorzugten Ausführung R¹ und/ oder R² auch eine verzweigte Alkenylgruppe ausgewählt aus der Gruppe Hexenyl, Heptenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Eicosenyl, Hexadienyl, Heptadienyl, Octadienyl, Nonadienyl, Decadienyl, Undecadienyl, Dodecadienyl, Tridecadienyl, Tetradecadienyl, Pentadecadienyl, Hexadecadienyl, Heptadecadienyl, Octadecadienyl, Nonadecadienyl, Eicosadienyl, Hexatrienyl, Heptatrienyl, Octatrienyl, Nonatrienyl, Decatrienyl, Undecatrienyl, Dodecatrienyl, Tridecatrienyl, Tetradecatrienyl, Pentadecatrienyl, Hexadecatrienyl, Heptadecatrienyl, Octadecatrienyl, Nonadecatrienyl oder Eicosatrienyl bedeuten, die ihrerseits mit einer oder mehreren C1- bis C12-Alkylgruppen oder mit einer oder mehreren C2- bis C12-Alkyenylgruppen substituiert sind, wobei C1- bis C12-Alkyl weiterhin bevorzugt Methyl, Ethyl, n-Propyl, n-Butyl, n-Pentyl, n-Hexyl, n-Heptyl, n-Octyl, n-Nonyl, n-Decyl, n-Undecyl oder n-Dodecyl, und wobei C2- bis C12-Alkenyl weiterhin bevorzugt Vinyl, Allyl, Butenyl, Pentenyl, Hexenyl, Heptenyl, Octenyl, Nonenyl, Decenyl, Undecenyl oder Dodecenyl bedeuten kann.

Bevorzugt werden als Reste R¹ und/ oder R² lineare Alkenylgruppen mit 8 bis 18 Kohlenstoffatomen, insbesondere geradzahlige, lineare Alkenylgruppen mit 8 bis 18 Kohlenstoffatomen, speziell auch im Gemisch untereinander, so wie sie aus natürlichen Fetten gewonnen werden können.

Im Zusammenhang mit der vorliegenden Erfindung soll unter einer linearen Alkenylgruppe mit 8 bis 18 Kohlenstoffatomen eine Alkenylgruppe verstanden sein, die in Summe 8 bis 18 Kohlenstoffatome und eine Doppelbindung aufweist, und die insbesondere die allgemeine Formel CₙH₂ₙ₋₁ aufweist, wobei n = eine ganze Zahl von 8 bis 18 bedeutet.

Somit bedeutet R¹ und/ oder R² bevorzugt Octenyl, Nonenyl, Decenyl, Undecenyl, Dodecenyl, Tridecenyl, Tetradecenyl, Pentadecenyl, Hexadecenyl, Heptadecenyl und Octadecenyl. Besonders bevorzugt bedeutet R¹ und/ oder R² Octenyl, Decenyl, Dodecenyl, Tetradecenyl, Hexadecenyl, und Octadecenyl.

Weiterhin soll im Zusammenhang mit der vorliegenden Erfindung unter einer Phenylgruppe ein nicht-substituierter aromatischer Rest der Formel C₆H₅ verstanden sein. Im Unterschied hierzu soll unter einem alkylsubstituierten Phenylgruppe eine mit mindestens einer Alkylgruppe substituierte Phenylgruppe verstanden sein, wobei Alkyl in diesem Zusammenhang bevorzugt C1- bis C10-Alkyl bedeutet, und C1- bis C10-Alkyl weiterhin bevorzugt für Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, n-Heptyl, n-Octyl, n-Nonyl, 7-Methyloctyl, 2,4-Dimethyl-3-heptyl oder n-Decyl steht.

Weiterhin soll im Zusammenhang mit der vorliegenden Erfindung unter einer ein-oder mehrfunktionellen Siloxangruppe eine Siloxangruppe verstanden sein, die durch gemischte Hydrolyse aus
a) einem oder mehreren Chlorsilanen aus der Gruppe Trimethylchlorsilan, Dimethyldichlorsilan und Methyltrichlorsilan, und
b) einem oder mehreren 3-Heteropropylsubstituierten Chlorsilanen aus der Gruppe der 3-Heteropropyl-trichlorsilan, 3-Heteropropyl-methyldichlorsilan und 3-Heteropropyl-dimethylchlorsilan, wobei 3-Heteropropyl die Bedeutung hat: 3-Chlorpropyl, 3-Hydroxypropyl oder 3-(Hydroxyethoxy)propyl,
herstellbar sind.

Typische aus diesen Bausteinen herstellbare ein- oder mehrfunktionelle Siloxangruppen sind nachfolgend in den Formeln genannt, wobei Formel (III) für eine monofunktionelle Siloxangruppe, Formel (IV) für eine bifunktionelle Siloxangruppe sowie Formeln (V) und (Va) für eine v-funktionelle Siloxangruppe steht, und für die Formeln (III), (IV), (V) und (Va) gilt:

(H₃C)₃Si-O-((CH₃)₂SiO)ₓ-Si(CH₃)₂-(CH₂)₃- Formel (III)

wobei für den Index x gilt:
x = eine Zahl von 0 bis 15, insbesondere eine Zahl von 0 bis 10, insbesondere eine Zahl von 3 bis 10,

H-(OCH₂CH₂)_{y}-O-(CH₂)₃-((CH₃)₂SiO)_{z}-Si(CH₃)₂-(CH₂)₃- Formel (IV)

wobei für die Indizes y und z gilt:
y = eine Zahl von 2 bis 20, insbesondere eine Zahl von 2 bis 10, insbesondere eine Zahl von 3 bis 10,
z = eine Zahl von 0 bis 10, insbesondere eine Zahl von 0 bis 5, insbesondere eine Zahl von 1 bis 3, 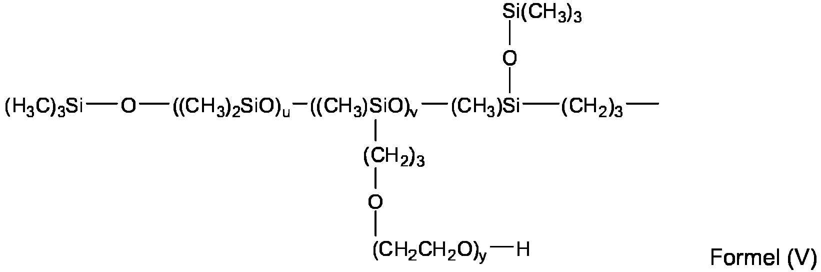
wobei für die Indizes y, u und v gilt:
y = eine Zahl von 2 bis 20, insbesondere eine Zahl von 2 bis 10, insbesondere eine Zahl von 3 bis 10,
u = eine Zahl von 0 bis 15, insbesondere eine Zahl von 0 bis 10, insbesondere eine Zahl von 0 bis 3,
v = eine Zahl von 0 bis 4, insbesondere eine Zahl von 0 bis 3.

Besonders bevorzugt sind v-funktionelle Siloxangruppen, insbesondere Siloxangruppen der Formel (Va), die ein Spezialfall der Formel (V) für u = v = 0 darstellt, wobei für Formel (Va) gilt:

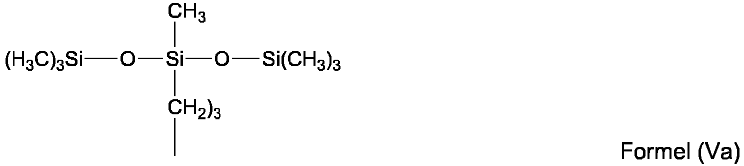

Gemäß einer besonders bevorzugten Ausführung ist vorgesehen, dass als nichtionisches Tensid ein Ethoxylate gemäß Formel (I) eingesetzt wird, wobei für den Rest R¹ und den Index n gilt:
- R¹ =: lineare oder verzweigte Alkylgruppe mit 8 bis 18 Kohlenstoffatomen, alkylsubstituierte Phenylgruppe, ein monofunktionelles Siloxan der Formel (III) mit x = eine Zahl von 3 bis 10, ein bifunktionelles Siloxan der Formel (IV) mit z = eine Zahl von 1 bis 3 und y = eine Zahl von 2 bis 10, oder eine mehrfunktionelle Siloxangruppe der Formel (V) mit u = eine Zahl von 0 bis 3 und v = eine Zahl von 0 bis 3 und y = eine Zahl von 2 bis 10, insbesondere eine Zahl von 3 bis 10,
- n =: eine Zahl von 2 bis 20, insbesondere eine Zahl von 2 bis 10, insbesondere eine Zahl von 3 bis 10.

Gemäß einer weiterhin bevorzugten Ausführung, kann als nichtionisches Tensid auch Gemisch aus verschiedenen Ethoxylaten gemäß Formel (I) eingesetzt werden. Hierbei hat sich besonders wirkungsvoll ein Gemisch aus mindestens zwei verschiedenen Ethoxylaten gemäß Formel (I) gezeigt, wobei für den Rest R¹ und den Index n gilt:
- R¹ =: eine mehrfunktionelle Siloxangruppe der Formel (V) mit u = eine Zahl von 0 bis 3 und v = eine Zahl von 0 bis 3 und y = eine Zahl von 2 bis 10,
- n =: eine Zahl von 2 bis 20, insbesondere eine Zahl von 2 bis 10, insbesondere eine Zahl von 3 bis 10.

Gemäß einer weiterhin bevorzugten Ausführung, kann als nichtionisches Tensid auch Gemisch aus verschiedenen Ethoxylaten gemäß Formel (I) eingesetzt werden. Hierbei hat sich besonders wirkungsvoll ein Gemisch aus mindestens zwei verschiedenen Ethoxylaten gemäß Formel (I) gezeigt, wobei für den Rest R¹ und den Index n gilt:
- R¹ =: n-Dodecyl, n-Hexadecyl und n-Octadecyl,
- n =: eine Zahl von 2 bis 20, insbesondere eine Zahl von 2 bis 10.

Ganz besonders bevorzugt sind Ethoxylate gemäß Formel (I), wobei für den Rest R¹ und den Index n gilt:
- R¹ =: n-Dodecyl, n-Tetradecyl, n-Hexadecyl, n-Octadecyl, Methyldecyl, Methyldodecyl, Methyltetradecyl, oder ein Siloxan der Formel (Va),
- n =: eine Zahl von 4 bis 8.

Gemäß einer alternativen bevorzugten Ausführung ist vorgesehen, dass als nichtionisches Tensid ein Fettalkoholglucoside gemäß Formel (II) eingesetzt wird, wobei für den Rest R² und den Index m gilt:
- R² =: lineare Alkylgruppe mit 8 bis 18 Kohlenstoffatomen,
- m =: eine Zahl von 2 bis 5.

Ganz besonders bevorzugt sind Fettalkoholglucoside gemäß Formel (II), wobei für den Rest R² und den Index m gilt:
- R² =: n-Hexadecyl oder n-Octadecyl,
- m =: eine Zahl von 3 bis 5

Diese besonders bevorzugten nichtionischen Tenside bewirken eine besonders gute Lagerstabilität. So können wässrige Cyanamid-haltige Lösungen, die neben den bekannten Stabilisatoren ein nichtionisches Tenside der genannten Art enthalten, auch in Regionen mit Durchschnittstemperaturen von mehr als 30 °C im Schatten exportiert werden, ohne dass eine Kühlung notwendig ist.

Im Umfang der der Erfindung zugrundeliegenden Untersuchung konnte dabei festgestellt werden, dass diese Tenside in einer Menge von 0,01 bis 4 Gew.-% bezogen auf die Gesamtmenge an Lösung stabilisierend wirkt, sofern hierbei das Gewichtsverhältnis von Cyanamid zu nichtionischen Tensid im Bereich von 500 : 1 bis 5 : 1 eingestellt wird. Hervorzuheben ist hierbei, dass das hierbei verwendete Tensid als solches oder in Abmischung mit einem weiteren Tensid der Formel (I) und/oder der Formel (II) verwendet werden kann. Besonders gute Stabilisierungen konnten erreicht werden, wenn das Gewichtsverhältnis von Cyanamid zu nichtionischen Tensid im Bereich von 100 : 1 bis 5 : 1 eingestellt wird. Somit ist gemäß einer besonders bevorzugten Ausführung der Erfindung auch vorgesehen, dass die Komponenten a) und c) in einem Gewichtsverhältnis Cyanamid zu nichtionischen Tensid im Bereich von 100 : 1 bis 5 : 1, bevorzugt im Bereich von 80 : 1 bis 5 : 1, weiter bevorzugt im Bereich von 50 : 1 bis 5 : 1, weiter bevorzugt im Bereich von 30 : 1 bis 5 : 1, weiter bevorzugt im Bereich von 20 : 1 bis 5 : 1 und ganz besonders bevorzugt im Bereich von 10 : 1 bis 5: 1, vorliegen.

Gemäß der vorliegenden Erfindung enthält eine Cyanamid-haltige Lösung 0,01 bis 4 Gew.-%, bevorzugt 0,01 bis 3 Gew.-% und besonders bevorzugt 0,01 bis 2 Gew.-%, eines Stabilisators enthaltend eine oder mehrere Verbindungen aus der Gruppe der Phosphor-haltigen Säuren oder deren Salze. Besonders bevorzugt kann hierbei als Phosphor-haltige Säure Orthophosphorsäure (H₃PO₄) eingesetzt werden. Sollten Salze dieser Phosphor-haltigen Säuren eingesetzt werden, so können bevorzugt Salze der Orthophosphorsäure eingesetzt werden. Ganz besonders bevorzugt kann als Salz der Phosphor-haltigen Säure Ammoniumdihydrogenphosphat, Diammoniumhydrogenphosphat, Natriumdihydrogenphosphat, Dinatriumhydrogenphosphat, Kaliumdihydrogenphosphat, Dikaliumhydrogenphosphat oder Magnesiumhydrogenphosphat eingesetzt werden.

Gleichzeitig oder unabhängig hiervon kann der Stabilisator ein oder mehrere Verbindungen aus der Gruppe der Phosphorhaltigen-Säuren und deren Salze enthalten, die in Kombination einen Puffer bilden. Ein Puffer ist ein Stoffgemisch, dessen pH-Wert (Konzentration der Oxoniumionen) sich bei Zugabe einer Säure oder einer Base wesentlich weniger stark ändert, als dies in einem ungepufferten System der Fall wäre. Die Wirkung des Puffers beruht auf der Umsetzung der durch die Säure bzw. Base zugeführten Oxoniumionen (H₃O⁺) bzw. der Hydroxidionen (OH⁻) zu schwachen Säuren bzw. Basen, die selbst nur wenig zur Bildung von H₃O⁺ bzw. OH⁻-Ionen neigen.

Ganz besonders bevorzugt kann eine Cyanamid-haltige Lösung gemäß der vorliegenden Erfindung einen Stabilisator enthalten, der ein oder mehrere Verbindungen aus der Gruppe der Phosphor-haltigen Säuren oder deren Salze enthält, die einen Puffer bilden, und die weiter bevorzugt in einem Verhältnis abgemischt sind, so dass sich in der Cyanamid-haltigen Lösung ein Pufferkapazität von 0,1 bis 100 mmol/l (25 °C), bevorzugt 0,2 bis 50 mmol/l (25°C), besonders bevorzugt 1 bis 10 mmol/l (25°C) einstellt. Somit eingestellte Cyanamid-haltige Lösungen sind besonders lagerstabil.

Weiterhin kann gemäß einer weiter bevorzugten Ausführung auch vorgesehen sein, dass eine Cyanamid-haltige Lösung gemäß der vorliegenden Erfindung einen pH-Wert im Bereich von 3,5 bis 5,5, bevorzugt im Bereich von 3,9 bis 4,5, aufweist. Somit eingestellte Cyanamid-haltige Lösungen sind besonders lagerstabil.

Cyanamid-haltige Lösung weisen herstellungsbedingt immer einen geringen Anteil an Dicyandiamid auf. Zudem wird Dicyandiamid auch in stabilisierten wässrigen Cyanamid-Lösungen gebildet. In den allermeisten Anwendungen sind Dicyandiamid-Gehalte in Cyanamid-haltigen Lösungen bis zu 6 Gew.-% toleriert. Somit kann eine erfindungsgemäße Cyanamid-haltige Lösung auch einen Anteil an Dicyandiamid aufweisen, wobei der Gehalt an Dicyandiamid höchstens 6 Gew.-%, insbesondere höchstens 5 Gew.-%, insbesondere höchstens 4 Gew.-%, insbesondere höchstens 3 Gew.-% und besonders bevorzugt höchstens 2 Gew.-% beträgt. Insbesondere frisch hergestellte Cyanamid-haltige Lösungen weisen höchstens 2 Gew.-% Dicyandiamid auf.

Aufgrund der besonderen Stabilisierung durch den erfindungsgemäßen Einsatz von nichtionischen Tensiden enthaltend eine oder mehrere Verbindungen ausgewählt aus der Gruppe der Ethoxylate gemäß Formel (I), der Fettalkoholglucoside gemäß Formel (II) oder Mischungen hiervon, ist auch eine Cyanamid-haltige Lösung Gegenstand der vorliegenden Erfindung, die einen Gehalt an Dicyandiamid nach einer Lagerzeit von 180 Tagen bei einer Temperatur von 30 °C von höchstens 6 Gew.-%, insbesondere von höchstens 5 Gew.-%, insbesondere von höchstens 4 Gew.-% aufweist.

In einer weiterhin vorteilhaften Ausführung der Erfindung, weist eine erfindungsgemäße Cyanamid-haltige Lösung bei einer Temperatur von 25 °C eine Oberflächenspannung von weniger als 70 mN/m, bevorzugt von weniger als 60 mN/m, und ganz besonders bevorzugt von weniger als 40 mN/m, auf, wobei gleichzeitig oder unabhängig hiervon vorgesehen sein kann, dass die Lösung bei einer Temperatur von 25 °C eine Oberflächenspannung von mindestens 5 mN/m aufweist.

In einer weiterhin vorteilhaften Ausführung der Erfindung, weist eine erfindungsgemäße Cyanamid-haltige Lösung bei einer Temperatur von 25 °C eine Viskosität von weniger als 1 Pa*s aufweist. Die erfindungsgemäßen Lösungen weisen vorzugsweise eine Viskosität von weniger als 500 mPa*s, mehr bevorzugt von weniger als 100 mPa*s und noch mehr bevorzugt von weniger als 50 mPa*s bei 25 °C auf.

Im Umfang der vorliegenden Erfindung kann weiterhin vorgesehen sein, dass die Cyanamid-haltige Lösung weitere Inhaltsstoffe, nämlich Formulierungshilfsstoffe, umfassen oder enthalten kann. Bevorzugt ist dabei vorgesehen, dass die Cyanamid-haltige Lösung mindestens einen Formulierungshilfsstoff, insbesondere aus der Gruppe der Viskositätsmodifikatoren, Farbstoffe, Markierungsstoffe und Bitterstoffe, umfasst oder enthält. Diese Formulierungshilfsstoffe können in einer Menge bis zu 5 Gew.-% in der Lösung umfasst oder enthalten sein. Im Unterschied zu erfindungswesentlich enthaltenen nichtionischen Tenside weisen diese Formulierungshilfsstoffe jedoch keinen Effekt auf die Lagerstabilität der Cyanamid-haltigen Lösungen auf und dienen ausschließlich anwendungsspezifischer Anforderungen.

Besonders bevorzugt ist dabei vorgesehen, dass die Formulierungshilfsstoffe in einer Menge bis zu 4 Gew.-%, weiter bevorzugt bis zu 3 Gew.-% und besonders bevorzugt bis zu 2 Gew.-% umfasst oder enthalten sind. Sollte die erfindungsgemäße Cyanamid-haltige Lösung aufgrund von anwendungsspezifischen Anforderungen Formulierungshilfsstoffe aufweisen, so kann die Cyanamid-haltige Lösung bevorzugt 0,01 Gew.-% Formulierungshilfsstoffe, insbesondere 0,1 Gew.-%, umfassen oder enthalten.

Hervorzuheben ist, dass im Zusammenhang mit der vorliegenden Erfindung unter einem Formulierungshilfsstoff kein Öl verstanden sein soll, insbesondere kein Öl aus der Gruppe der natürlichen Öle, insbesondere Öle tierischer oder pflanzlicher Herkunft, und synthetische Öle. Darüber hinaus umfasst oder enthält eine Cyanamid-haltige Lösung gemäß der vorliegenden Erfindung kein Öl, insbesondere kein Öl aus der Gruppe der natürlichen Öle, insbesondere Öle tierischer oder pflanzlicher Herkunft, und synthetische Öle.

Damit ist auch eine Cyanamid-haltige Lösung Gegenstand der vorliegenden Erfindung, die umfasst oder enthält:
a) 15 bis 60 Gew.-% Cyanamid,
b) 0,01 bis 4 Gew.-% eines Stabilisators enthaltend eine oder mehrere Verbindungen aus der Gruppe der Phosphor-haltigen Säuren oder deren Salze,
c) 0,01 bis 4 Gew.-% eines nichtionischen Tensids ausgewählt aus der Gruppe der Ethoxylate gemäß Formel (I), der Fettalkoholglucoside gemäß Formel (II) oder Mischungen hiervon,
d) 0 bis 6 Gew.-% Dicyandiamid,
e) 0,01 bis 5 Gew.-% Formulierungshilfsstoff, und
f) Rest Wasser,
wobei die Komponenten a) und c) in einem Gewichtsverhältnis Cyanamid zu nichtionischen Tensid im Bereich von 500 : 1 bis 5 : 1 vorliegen.

Ganz besonders bevorzugt umfasst oder enthält eine Cyanamid-haltige Lösung gemäß der vorliegenden Erfindung
a) 35 bis 52 Gew.-% Cyanamid,
b) 0,01 bis 4 Gew.-% eines Stabilisators enthaltend eine oder mehrere Verbindungen aus der Gruppe der Phosphor-haltigen Säuren oder deren Salze,
c) 0,01 bis 4 Gew.-% eines nichtionischen Tensids ausgewählt aus der Gruppe der Ethoxylate gemäß Formel (I), der Fettalkoholglucoside gemäß Formel (II) oder Mischungen hiervon,
d) 0,01 bis 4 Gew.-% Dicyandiamid,
e) 0,01 bis 4 Gew.-% Formulierungshilfsstoffe, und
f) Rest Wasser,
wobei die Komponenten a) und c) in einem Gewichtsverhältnis Cyanamid zu nichtionischen Tensid im Bereich von 500 : 1 bis 5 : 1 vorliegen.

Die hiermit beschriebenen wässrigen Cyanamid-haltigen Lösungen zeigen im Vergleich zu bekannten, wässrigen bereits stabilisierten Cyanamidlösung bei der Lagerung eine verbesserte Stabilität auf und sind zur Regulierung des Pflanzenwachstums bzw. als Formulierung für einen Cyanamid-haltigen Pflanzenwachstumsregulator bestens geeignet. Damit ist im Umfang der vorliegenden Erfindung auch eine aus bzw. mit dieser wässrigen Cyanamid-haltigen Lösung anwendungsgerecht hergestellte Zubereitung Gegenstand der vorliegenden Erfindung.

Des Weiteren ist die Verwendung der hiermit beschriebenen Cyanamid-haltige Lösung oder eine unter Verwendung dieser wässrige Cyanamid-haltige Lösung hergestellte Zubereitung als Mittel zur Regulierung des Pflanzenwachstums, insbesondere als Düngemittel oder als Pflanzenwachstumsregulator, von der vorliegenden Erfindung umfasst.

Weiterhin ist auch die Verwendung eines nichtionischen Tensids enthaltend eine oder mehrere Verbindungen ausgewählt aus der Gruppe der Ethoxylate gemäß Formel (I), der Fettalkoholglucoside gemäß Formel (II) oder Mischungen hiervon, zur Stabilisierung von Cyanamid-haltigen Lösungen, insbesondere zur Stabilisierung von Cyanamid-haltigen Lösungen der hierin beschriebenen Zusammensetzung, Gegenstand der vorliegenden Erfindung, wobei für Formel (I) und (II) gilt,

R¹-O-(CH₂CH₂O)ₙ-H Formel (I)

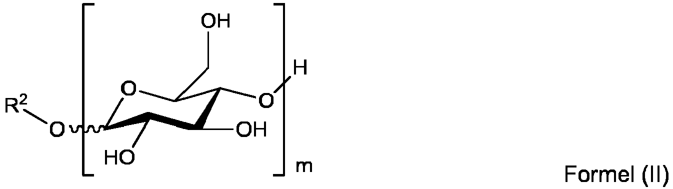

wobei für die Reste R¹, R² und die Indizes n, m gleichzeitig oder unabhängig gilt:
- R¹: = eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
- R²: = eine lineare oder verzweigte Alkyl- oder Alkenylgruppe mit 6 bis 24 Kohlenstoffatomen,
- n: = eine Zahl von 2 bis 20,
- m: = eine Zahl von 1 bis 5.

Die nachfolgenden Beispiele sollen die Erfindung näher erläutern.

### Beispiele

### I) Verwendete Rohstoffe

a) technischer, gemahlener Kalkstickstoff (Hersteller: AlzChem AG) mit 23,1% Gesamt-Stickstoffgehalt, 22,2% Cyanamid-Stickstoff und 0,1% Calciumcarbidgehalt.
b) handelsübliche 85%ige Phosphorsäure
c) Magnesiumhydrogenphosphat-Trihydrat der Formel MgHPO₄.3H₂O, Hersteller: Fa. Aldrich, Best.Nr. M1265
d) Ethoxyliertes iso-tridecanol mit durchschnittlich 5 Ethylenoxid-Einheiten, Handelsname: Marlipal 013/50 der Fa. Evonik
e) ethoxyliertes Trisiloxan, Handelsname: Break-Thru S240 der Fa. Evonik
f) Octadecyl-Polyglucosid mit durchschnittlich 3 Glucose-Einheiten, Handelsname: Cognis APG der Fa. Cognis
g) Nonylphenyl-Ethoxylat mit durchschnittlich 5 Ethylenoxid-Einheiten, Handelsname: Triton N-57 der Fa. Dow Chemical
h) Natriumstearat der Fa. TCI Europe, Best.Nr. S00081
i) Natriumdodecylsulfat der Fa. Aldrich, Best.Nr. 436143

### II) Analysemethoden

a) Der Cyanamid-Gehalt wurde per potentiometrischer Titration mit Silbernitrat gegen eine Silberelektrode bestimmt. Das Lösemittel wurde wie folgt hergestellt: 10 ml einer 1-molaren Natronlauge und 20 ml einer 2-molaren Ammoniaklösung wurden mit 330 ml Ethanol vermischt und mit Wasser auf 1000 ml aufgefüllt. Eine Einwaage entsprechend ca. 5 mg Cyanamid wurde in 50 ml dieses Lösemittels vorgelegt und mit einer 0,05-molaren Silbernitratlösung titriert, wobei gelbes Silbercyanamid Ag₂NCN ausfiel. Der Titrationsendpunkt für die Auswertung entsprach dem Wendepunkt des Potentials an der Silberelektrode.
b) Dicyandiamid (DCD) wurde per Umkehrphasen-HPLC gegen einen externen Standard mit bekanntem Gehalt bestimmt. Verwendete Säule: Nucleosil 5 C-18 bei 20°C. Mobile Phase: 1% Methanol in Wasser. Detektionswellenlänge: 220 nm.
c) Der pH-Wert wurde mittels einer kalibrierten Glaselektrode (Referenzelektrode AgCl/Ag) ohne weitere Probenvorbereitung gemessen.
d) Phosphat wurde mittels Ionenchromatographie gegen einen externen Standard mit bekanntem Phosphatgehalt bestimmt. Verwendete Säule: Dionex HPIC AS3 bei 20°C. Als mobile Phase diente gepuffertes Reinst-Wasser mit einem Zusatz von 233 ppm Natriumcarbonat und 235 ppm Natriumhydrogencarbonat. Detektion mittels Leitfähigkeitssensor.

### III) Prüfmethode zur Lagerung der untersuchten Cyanamid-Lösungen

250 ml Natronglas-Enghalsflaschen wurden mit deionisiertem Wasser gereinigt, um anhaftende Alkalispuren zu entfernen. 200 g der zu untersuchenden Lösung wurden jeweils in eine derart vorbereitete Flasche gefüllt. Die zu prüfenden Flaschen wurden in je einem kalibrierten Umluft-Trockenschrank mit 30 bzw. 60°C Innentemperatur gelagert. Für jede Prüftemperatur und jeden Prüfzeitraum wurde eine eigene Flasche verwendet. Nach Ende des Prüfzeitraums wurde die jeweilige Flasche aus dem Trockenschrank entnommen, auf 20°C abgekühlt und entsprechend den obigen Analysenmethoden auf Cyanamid, DCD und pH untersucht.

Die untersuchten Prüfzeiträume waren:
- bei 60°C (beschleunigter Lagertest): 24 Stunden bzw. 48 Stunden bzw. 96 Stunden
- bei 30°C (normaler Lagertest) : 90 bzw. 180 Tage

### IV) Herstellung der wässrigen Cyanamid-haltigen Zusammensetzungen (Lösungen)

### Lösung 1a)

720 kg technischer, gemahlener Kalkstickstoff wurden mit 800 kg Brauchwasser bei 20°C unter einem Druck von 3 bar mit technisch reinem Kohlendioxidgas umgesetzt. Das ausgefallene Calciumcarbonat wurde zusammen mit den im Kalkstickstoff enthaltenen unlöslichen Nebenprodukten (u.a. Graphit) abfiltriert. Das Filtrat wurde mit 2,3 kg 85%iger Phosphorsäure von pH 6,9 auf pH 4,0 gestellt. Die erhaltene 33%ige Cyanamid-Lösung (ca. 1000 kg) wurde unter vermindertem Druck (ca. 20 mbar) bei 30-40°C partiell eingedampft. Als Destillationsrückstand wurden ca. 650 kg der Probelösung 1a erhalten. Diese Probelösung 1a hatte folgende Zusammensetzung: Cyanamid-Gehalt: 50,7%, Dicyandiamid-Gehalt: 0,8%, pH-Wert 4,3, PhosphatGehalt: 0,3%.

### Lösung 1b)

720 kg technischer Kalkstickstoff wurden mit 800 kg Brauchwasser bei 20°C unter einem Druck von 3 bar mit technisch reinem Kohlendioxidgas umgesetzt. Das ausgefallene Calciumcarbonat wurde zusammen mit den im Kalkstickstoff enthaltenen unlöslichen Nebenprodukten (u.a. Graphit) abfiltriert. Das Filtrat wurde mit 1,4 kg Magnesiumhydrogenphosphat-Trihydrat versetzt und mit 1,3 kg 85%iger Phosphorsäure von pH 5,6 auf pH 4,3 gestellt. Die erhaltene ca. 33%ige Cyanamid-Lösung wurde unter vermindertem Druck (ca. 20 mbar) bei 30-40°C partiell eingedampft. Als Destillationsrückstand wurden ca. 630 kg der Probelösung 1b erhalten. Diese Probelösung 1b hatte folgende Zusammensetzung: Cyanamid-Gehalt: 51,1%, Dicyandiamid-Gehalt: 0,8%, pH-Wert 4,5, PhosphatGehalt: 0,3%, Magnesiumgehalt; 0,03%.

### Lösung 1c)

720 kg technischer Kalkstickstoff wurden mit 800 kg Brauchwasser bei 20°C unter einem Druck von 3 bar mit technisch reinem Kohlendioxidgas umgesetzt. Das ausgefallene Calciumcarbonat wurde zusammen mit den im Kalkstickstoff enthaltenen unlöslichen Nebenprodukten (u.a. Graphit) abfiltriert. Das Filtrat wurde mit 1,4 kg Magnesiumhydrogenphosphat-Trihydrat versetzt und mit 1,3 kg 85%iger Phosphorsäure von pH 5,6 auf pH 4,3 gestellt. Die erhaltene ca. 33%ige Cyanamid-Lösung wurde unter vermindertem Druck (ca. 20 mbar) bei 30-40°C partiell eingedampft. Als Sumpf wurden ca. 800 kg der Probelösung 1c erhalten. Diese Probelösung 1c hatte folgende Zusammensetzung: Cyanamid-Gehalt: 40,2%, Dicyandiamid-Gehalt: 0,6%, pH-Wert 4,3, PhosphatGehalt: 0,2%, Magnesiumgehalt; 0,02%.

### Tensid-haltige Lösungen 2a bis 7b

Die Tensid-haltigen Lösungen 2a bis 7b wurden hergestellt, indem jeweils 990 g der Stammlösungen 1a bzw. 1b bzw. 1c mit 10 g des jeweils angegebenen Tensids versetzt wurden und die Mischung bis zur Homogenität gerührt wurde. Die Cyanamid-Konzentration der Ausgangslösungen verringert sich dadurch geringfügig, was durch entsprechende Analysen bestätigt wurde. Der pH-Wert veränderte sich bei Einsatz der erfindungsgemäßen nichtionischen Tenside nicht in messbarer Weise. Bei Einsatz anionischer Tenside veränderte sich der pH-Wert z.T. deutlich.

**Tabelle 1a: wässrige Cyanamid-haltige Zusammensetzung (erfindungsgemäß)**

| Nr. | Gehalt Cyanamid | Stabilisator | nichtionisches Tensid |
|---|---|---|---|
| 1a (Vergleich) | 50,7 Gew.-% | 0,3 Gew.-% Phosphat | kein |
| 1b (Vergleich) | 50,1 Gew.-% | 0,3 Gew.-% Phosphat | kein |
| | | 0,03 Gew.-% Mg²⁺ | |
| 1c (Vergleich) | 40,2 Gew% | 0,2 Gew.-% Phosphat | kein |
| | | 0,02 Gew.-% Mg²⁺ | |
| 2a (erfindungsgemäß) | 50,2 Gew.-% | 0,3 Gew.-% Phosphat | 1 Gew.-% ethox. iso-Tridecanol gemäß l)d) |
| 2b (erfindungsgemäß) | 50,6 Gew.-% | 0,3 Gew.-% Phosphat | 1 Gew.-% ethox. iso-Tridecanol gemäß I)d) |
| | | 0,03 Gew.-% Mg²⁺ | |
| 2c (erfindungsgemäß) | 39,8 Gew% | 0,2 Gew.-% Phosphat | 1 Gew.-% ethox. iso-Tridecanol gemäß I)d) |
| | | 0,02 Gew.-% Mg²⁺ | |
| 3a (erfindungsgemäß) | 50,2 Gew.-% | 0,3 Gew.-% Phosphat | 1 Gew.-% ethox. Trisiloxan gemäß l)e) |
| 3b (erfindungsgemäß) | 50,6 Gew.-% | 0,3 Gew.-% Phosphat | 1 Gew.-% ethox. Trisiloxan gemäß l)e) |
| | | 0,03 Gew.-% Mg²⁺ | |
| 3c (erfindungsgemäß) | 39,8 Gew% | 0,2 Gew.-% Phosphat | 1 Gew.-% ethox. Trisiloxan gemäß l)e) |
| | | 0,02 Gew.-% Mg²⁺ | |
| 4a (erfindungsgemäß) | 50,2 Gew.-% | 0,3 Gew.-% Phosphat | 1 Gew.-% Octadecyl-Polyglucosid gemäß l)f) |
| 4b (erfindungsgemäß) | 50,6 Gew.-% | 0,3 Gew.-% Phosphat | 1 Gew.-% Octadecyl-Polyglucosid gemäß l)f) |
| | | 0,03 Gew.-% Mg²⁺ | |
| 5a (erfindungsgemäß) | 50,2 Gew.-% | 0,3 Gew.-% Phosphat | 1 Gew.-% ethox. Nonylphenol gemäß l)g) |
| 5b (erfindungsgemäß) | 50,6 Gew.-% | 0,3 Gew.-% Phosphat | 1 Gew.-% ethox. Nonylphenol gemäß l)g) |
| | | 0,03 Gew.-% Mg²⁺ | |

**Tabelle 1b: wässrige Cyanamid-haltige Zusammensetzung (nicht erfindungsgemäß)**

| Nr. | Gehalt Cyanamid | Stabilisator | nichtionisches Tensid |
|---|---|---|---|
| 6a (nicht erfindungsgemäß) | 50,2 Gew.-% | 0,3 Gew.-% Phosphat | 1 Gew.-% Na-Stearat gemäß l)h) |
| 6b (nicht erfindungsgemäß) | 50,6 Gew.-% | 0,3 Gew.-% Phosphat | 1 Gew.-% Na-Stearat gemäß l)h) |
| | | 0,03 Gew.-% Mg²⁺ | |
| 7a (nicht erfindungsgemäß) | 50,2 Gew.-% | 0,3 Gew.-% Phosphat | 1 Gew.-% Na-Dodecylsulfat gemäß l)i) |
| 7b (nicht erfindungsgemäß) | 50,6 Gew.-% | 0,3 Gew.-% Phosphat | 1 Gew.-% Na-Dodecylsulfat gemäß l)i) |
| | | 0,03 Gew.-% Mg²⁺ | |

**Tabelle 2a: Lagerstabilität der Zusammensetzungen gemäß Tabelle 1a - bei 60 °C**

| Nr. | Untersuchte Werte | Ausgangwert | nach 24 Std. | nach 48 Std. | nach 96 Std. |
|---|---|---|---|---|---|
| 1a | pH-Wert | 4,3 | 5 | 5,6 | |
| | Gehalt Cyanamid [Gew.-%] | 50,7 | 49,2 | 47,2 | |
| | Gehalt DCD [Gew.-%] | 0,8 | 2,3 | 4,3 | |
| 1b | pH-Wert | 4,5 | | 5,1 | 5,8 |
| | Gehalt Cyanamid [Gew.-%] | 51,1 | | 49,6 | 46,0 |
| | Gehalt DCD [Gew.-%] | 0,8 | | 2,1 | 5,8 |
| 1c | pH-Wert | 4,3 | | 5,0 | 5,6 |
| | Gehalt Cyanamid [Gew.-%] | 40,2 | | 38,8 | 35,9 |
| | Gehalt DCD [Gew.-%] | 0,6 | | 1,8 | 4,6 |
| 2a | pH-Wert | 4,3 | 4,6 | 5,1 | |
| | Gehalt Cyanamid [Gew.-%] | 50,2 | 49,5 | 47,5 | |
| | Gehalt DCD [Gew.-%] | 0,8 | 1,7 | 3,1 | |
| 2b | pH-Wert | 4,5 | | 4,8 | 5,3 |
| | Gehalt Cyanamid [Gew.-%] | 50,6 | | 49,8 | 46,9 |
| | Gehalt DCD [Gew.-%] | 0,8 | | 1,7 | 4,2 |
| 2c | pH-Wert | 4,3 | | 4,7 | 5,4 |
| | Gehalt Cyanamid [Gew.-%] | 39,8 | | 39,3 | 36,6 |
| | Gehalt DCD [Gew.-%] | 0,6 | | 1,5 | 3,9 |
| 3a | pH-Wert | 4,3 | 4,7 | 5,2 | |
| | Gehalt Cyanamid [Gew.-%] | 50,2 | 49,3 | 47,7 | |
| | Gehalt DCD [Gew.-%] | 0,8 | 1,8 | 3,3 | |
| 3b | pH-Wert | 4,5 | | 4,7 | 5,3 |
| | Gehalt Cyanamid [Gew.-%] | 50,6 | | 49,7 | 47,1 |
| | Gehalt DCD [Gew.-%] | 0,8 | | 1,7 | 4,4 |
| 3c | pH-Wert | 0,6 | | 4,8 | 5,3 |
| | Gehalt Cyanamid [Gew.-%] | 39,8 | | 39,2 | 36,8 |
| | Gehalt DCD [Gew.-%] | 4,3 | | 1,4 | 3,6 |
| 4a | pH-Wert | 4,3 | 4,6 | 5,2 | |
| | Gehalt Cyanamid [Gew.-%] | 50,2 | 49,4 | 47,9 | |
| | Gehalt DCD [Gew.-%] | 0,8 | 1,6 | 3,0 | |
| 4b | pH-Wert | 4,5 | | 4,9 | 5,4 |
| | Gehalt Cyanamid [Gew.-%] | 50,6 | | 49,8 | 47,2 |
| | Gehalt DCD [Gew.-%] | 0,8 | | 1,6 | 4,1 |
| 5a | pH-Wert | 4,3 | 4,6 | 5,1 | |
| | Gehalt Cyanamid [Gew.-%] | 50,2 | 49,3 | 47,8 | |
| | Gehalt DCD [Gew.-%] | 0,8 | 1,7 | 3,2 | |
| 5b | pH-Wert | 4,5 | | 4,8 | 5,3 |
| | Gehalt Cyanamid [Gew.-%] | 50,6 | | 49,7 | 47,1 |
| | Gehalt DCD [Gew.-%] | 0,8 | | 1,7 | 4,2 |

**Tabelle 3a: Lagerstabilität der Zusammensetzungen gemäß Tabelle 1a - bei 30 °C**

| Nr. | Untersuchte Werte | Ausgangswert | nach 90 Tagen | nach 180 Tagen |
|---|---|---|---|---|
| 1a | pH-Wert | 4,3 | 5,8 | 6,2 |
| | Gehalt Cyanamid [Gew.-%] | 50,7 | 46,9 | 40,8 |
| | Gehalt DCD [Gew.-%] | 0,8 | 4,7 | 10,8 |
| 1b | pH-Wert | 4,5 | 5,0 | 5,8 |
| | Gehalt Cyanamid [Gew.-%] | 51,1 | 48,6 | 45,0 |
| | Gehalt DCD [Gew.-%] | 0,8 | 3,3 | 6,8 |
| 1c | pH-Wert | 4,3 | 4,9 | 5,6 |
| | Gehalt Cyanamid [Gew.-%] | 40,2 | 37,0 | 35,2 |
| | Gehalt DCD [Gew.-%] | 0,6 | 2,8 | 5,5 |
| 2a | pH-Wert | 4,3 | 4,8 | 5,9 |
| | Gehalt Cyanamid [Gew.-%] | 50,2 | 47,6 | 43,4 |
| | Gehalt DCD [Gew.-%] | 0,8 | 3,5 | 7,8 |
| 2b | pH-Wert | 4,5 | 4,7 | 5,3 |
| | Gehalt Cyanamid [Gew.-%] | 50,6 | 48,9 | 46,1 |
| | Gehalt DCD [Gew.-%] | 0,8 | 2,6 | 4,9 |
| 2c | pH-Wert | 4,3 | 4,7 | 5,4 |
| | Gehalt Cyanamid [Gew.-%] | 39,8 | 37,9 | 36,4 |
| | Gehalt DCD [Gew.-%] | 0,6 | 2,1 | 4,5 |
| 3a | pH-Wert | 4,3 | 4,8 | 5,9 |
| | Gehalt Cyanamid [Gew.-%] | 50,2 | 47,5 | 43,5 |
| | Gehalt DCD [Gew.-%] | 0,8 | 3,4 | 7,7 |
| 3b | pH-Wert | 4,5 | 4,8 | 5,3 |
| | Gehalt Cyanamid [Gew.-%] | 50,6 | 48,0 | 46,5 |
| | Gehalt DCD [Gew.-%] | 0,8 | 2,4 | 5 |
| 3c | pH-Wert | 4,3 | 4,7 | 5,3 |
| | Gehalt Cyanamid [Gew.-%] | 39,8 | 38,0 | 36,8 |
| | Gehalt DCD [Gew.-%] | 0,6 | 2,0 | 4,3 |
| 4a | pH-Wert | 4,3 | 4,7 | 5,7 |
| | Gehalt Cyanamid [Gew.-%] | 50,2 | 47,3 | 43,3 |
| | Gehalt DCD [Gew.-%] | 0,8 | 3,3 | 7,5 |
| 4b | pH-Wert | 4,5 | 4,7 | 5,3 |
| | Gehalt Cyanamid [Gew.-%] | 50,6 | 49,1 | 46,5 |
| | Gehalt DCD [Gew.-%] | 0,8 | 2,4 | 5,2 |
| 5a | pH-Wert | 4,3 | 4,7 | 5,5 |
| | Gehalt Cyanamid [Gew.-%] | 50,2 | 47,5 | 43,5 |
| | Gehalt DCD [Gew.-%] | 0,8 | 3,5 | 7,4 |
| 5b | pH-Wert | 4,5 | 4,8 | 5,3 |
| | Gehalt Cyanamid [Gew.-%] | 50,6 | 49,0 | 46,2 |
| | Gehalt DCD [Gew.-%] | 0,8 | 2,6 | 5,1 |

**Tabelle 2b: Lagerstabilität der Zusammensetzungen gemäß Tabelle 1b - bei 60 °C**

| Nr. | Untersuchte Werte | Ausgangwert | nach 24 Std. | nach 48 Std. | nach 96 Std. |
|---|---|---|---|---|---|
| 1a (Vergleich) | pH-Wert | 4,3 | 5 | 5,6 | |
| | Gehalt Cyanamid [Gew.-%] | 50,7 | 49,2 | 47,2 | |
| | Gehalt DCD [Gew.-%] | 0,8 | 2,3 | 4,3 | |
| 1b (Vergleich) | pH-Wert | 4,5 | | 5,1 | 5,8 |
| | Gehalt Cyanamid [Gew.-%] | 51,1 | | 49,6 | 46 |
| | Gehalt DCD [Gew.-%] | 0,8 | | 2,1 | 5,8 |
| 6a | pH-Wert | 5,7 | 5,9 | 6,4 | |
| | Gehalt Cyanamid [Gew.-%] | 50,2 | 48 | 44,9 | |
| | Gehalt DCD [Gew.-%] | 0,8 | 3,2 | 6,1 | |
| 6b | pH-Wert | 5,6 | | 6,1 | 6,4 |
| | Gehalt Cyanamid [Gew.-%] | 50,6 | | 48,5 | 42,9 |
| | Gehalt DCD [Gew.-%] | 0,8 | | 3 | > 10 * |
| 7a | pH-Wert | 4,5 | 5,3 | 6,2 | |
| | Gehalt Cyanamid [Gew.-%] | 50,2 | 48,1 | 45,3 | |
| | Gehalt DCD [Gew.-%] | 0,8 | 3 | 5,9 | |
| 7b | pH-Wert | 4,6 | | 5,2 | 6,2 |
| | Gehalt Cyanamid [Gew.-%] | 50,6 | | 48,9 | 43,5 |
| | Gehalt DCD [Gew.-%] | 0,8 | | 2,7 | 7,9 |

| | | | | | |
|---|---|---|---|---|---|
| * DCD als Feststoff ausgefallen | | | | | |

**Tabelle 3b: Lagerstabilität der Zusammensetzungen gemäß Tabelle 1b - bei 30 °C**

| Nr. | Untersuchte Werte | Ausgangswert | nach 90 Tagen | nach 180 Tagen |
|---|---|---|---|---|
| 1a (Vergleich) | pH-Wert | 4,3 | 5,8 | 6,2 |
| | Gehalt Cyanamid [Gew.-%] | 50,7 | 46,9 | 40,8 |
| | Gehalt DCD [Gew.-%] | 0,8 | 4,7 | 10,8 |
| 1b (Vergleich) | pH-Wert | 4,5 | 5,0 | 5,8 |
| | Gehalt Cyanamid [Gew.-%] | 51,1 | 48,6 | 45,0 |
| | Gehalt DCD [Gew.-%] | 0,8 | 3,3 | 6,8 |
| 6a | pH-Wert | 5,7 | 6 | 6,4 |
| | Gehalt Cyanamid [Gew.-%] | 50,2 | 44,4 | 35,2 |
| | Gehalt DCD [Gew.-%] | 0,8 | 6,8 | > 10 * |
| 6b | pH-Wert | 5,6 | 6 | 6,3 |
| | Gehalt Cyanamid [Gew.-%] | 50,6 | 46,7 | 41,2 |
| | Gehalt DCD [Gew.-%] | 0,8 | 4,7 | > 10 * |
| 7a | pH-Wert | 4,5 | 5,9 | 6,3 |
| | Gehalt Cyanamid [Gew.-%] | 50,2 | 44,7 | 35,9 |
| | Gehalt DCD [Gew.-%] | 0,8 | 6,4 | > 10 * |
| 7b | pH-Wert | 4,6 | 5,4 | 6,1 |
| | Gehalt Cyanamid [Gew.-%] | 50,6 | 47 | 41,7 |
| | Gehalt DCD [Gew.-%] | 0,8 | 4,5 | 9,6 |

| | | | | |
|---|---|---|---|---|
| * DCD als Feststoff ausgefallen | | | | |

### Bewertung der Ergebnisse

Lösung (1a) zeigt eine für manche Anwendungen bereits ausreichende Grundstabilisierung, die durch Zusatz von Magnesiumphosphat (Lösung (1b) bzw. (1c)) verbessert werden kann (entspricht dem Stand der Technik). Für viele Anwendungen ist jedoch auch diese verbesserte Stabilität nicht ausreichend.

Durch Vergleich der Stabilitätsdaten von Lösungen (2a) bis (5a) mit Lösung (1a), bzw. (2b) bis (5b) mit (1b) bzw. (2c) und (3c) mit (1c) bei 30 (Tabelle 3) bzw. bei 60°C (Tabelle 2) zeigt sich sehr deutlich der zusätzlich stabilisierende Effekt der nichtionischen Tenside. Durch Vergleich mit den Stabilitätsdaten von Lösung (6a) und (7a) bzw. (6b) und (7b) zeigt sich, dass anionische Tenside demgegenüber einen destabilisierenden Effekt haben, und deshalb nicht Bestandteil dieser Erfindung sind.

## Patentansprüche

1. Cyanamid-haltige Lösung umfassend
a) 15 bis 60 Gew.-% Cyanamid,
b) 0,01 bis 4 Gew.-% eines Stabilisators enthaltend eine oder mehrere Verbindungen aus der Gruppe der Phosphor-haltigen Säuren oder deren Salze
c) 0,01 bis 4 Gew.-% eines nichtionischen Tensids enthaltend eine oder mehrere Verbindungen ausgewählt aus der Gruppe der Ethoxylate gemäß Formel (I), der Fettalkoholglucoside gemäß Formel (II) oder Mischungen hiervon, wobei für Formel (I) und (II) gilt,
R¹-O-(CH₂CH₂O)ₙ-H Formel (I) 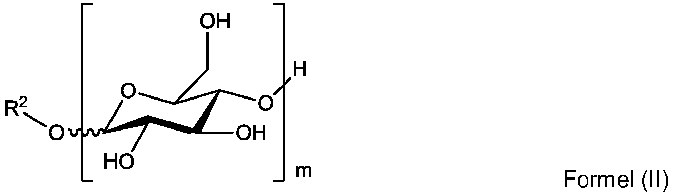
wobei für die Reste R¹, R² und die Indizes n, m gleichzeitig oder unabhängig gilt:
R¹ = eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
R² = eine lineare oder verzweigte Alkyl- oder Alkenylgruppe mit 6 bis 24 Kohlenstoffatomen,
n = eine Zahl von 2 bis 20,
m = eine Zahl von 1 bis 5,
d) Rest Wasser,
wobei die Komponenten a) und c) in einem Gewichtsverhältnis Cyanamid zu nichtionischen Tensid im Bereich von 500 : 1 bis 5 : 1 vorliegen.

2. Cyanamid-haltige Lösung nach Anspruche 1, **dadurch gekennzeichnet, dass** die Cyanamid-haltige Lösung 30 bis 60 Gew.-% Cyanamid, insbesondere 35 bis 52 Gew.-% Cyanamid, umfasst.

3. Cyanamid-haltige Lösung nach Anspruche 1 oder 2, **dadurch gekennzeichnet, dass** die Cyanamid-haltige Lösung als nichtionisches Tensid eine Verbindung ausgewählt aus der Gruppe der Ethoxylate gemäß Formel (I) umfasst, wobei für den Rest R¹ und die Indizes u, v, y und n gilt:
R¹ = eine lineare oder verzweigte Alkylgruppe mit 8 bis 18 Kohlenstoffatomen, alkylsubstituierte Phenylgruppe, eine mehrfunktionelle Siloxangruppe gemäß Formel (V), wobei für Formel (V) gilt 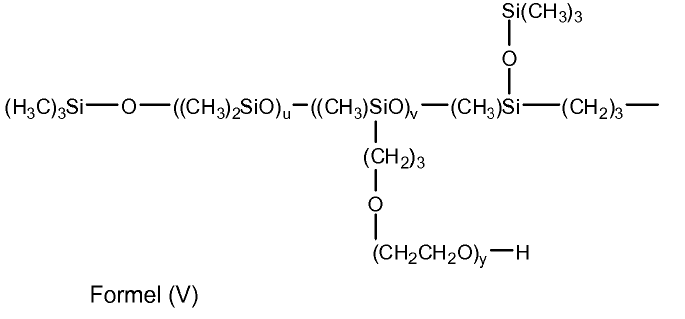 wobei für die Indizes u, v und y unabhängig voneinander gilt:
u = eine Zahl von 0 bis 3 und
v = eine Zahl von 0 bis 3,
y = eine Zahl von 2 bis 10,
n = eine Zahl von 2 bis 10.

4. Cyanamid-haltige Lösung nach Anspruche 1 oder 2, **dadurch gekennzeichnet, dass** die Cyanamid-haltige Lösung als nichtionisches Tensid eine Verbindung ausgewählt aus der Gruppe der Fettalkoholglucoside gemäß Formel (II) umfasst, wobei für den Rest R² und den Index m gilt:
R² = eine lineare Alkylgruppe mit 8 bis 18 Kohlenstoffatomen,
m = eine Zahl von 2 bis 5.

5. Cyanamid-haltige Lösung nach mindestens einem der vorhergehenden Ansprüche, **dadurch gekennzeichnet, dass** die Cyanamid-haltige Lösung als Stabilisator eine oder mehrere Verbindungen aus der Gruppe von Orthophosphorsäure, Ammoniumdihydrogenphosphat, Diammoniumhydrogenphosphat, Natriumdihydrogenphosphat, Dinatriumhydrogenphosphat, Kaliumdihydrogenphosphat, Dikaliumhydrogenphosphat oder Magnesiumhydrogenphosphat umfasst.

6. Cyanamid-haltige Lösung nach mindestens einem der vorhergehenden Ansprüche, **dadurch gekennzeichnet, dass** die Lösung einen pH-Wert im Bereich von 3,5 bis 5,5, bevorzugt im Bereich von 3,9 bis 4,5, aufweist.

7. Cyanamid-haltige Lösung nach mindestens einem der vorhergehenden Ansprüche, **dadurch gekennzeichnet, dass** die Cyanamid-haltige Lösung weiterhin bis zu 6 Gew.-% Dicyandiamid, insbesondere 0 bis 6 Gew.-% Dicyandiamid, insbesondere 0 bis 2 Gew.-% Dicyandiamid umfasst.

8. Cyanamid-haltige Lösung nach mindestens einem der vorhergehenden Ansprüche, **dadurch gekennzeichnet, dass** die Lösung eine Viskosität von weniger als 1 Pa*s (25 °C) aufweist.

9. Cyanamid-haltige Lösung nach mindestens einem der vorhergehenden Ansprüche, **dadurch gekennzeichnet, dass** die Cyanamid-haltige Lösung weiterhin bis zu 5 Gew.-% Formulierungshilfsstoffe, insbesondere 0 bis 5 Gew.-% Formulierungshilfsstoffe, insbesondere 0 bis 2 Gew.-% Formulierungshilfsstoffe, umfasst.

10. Verwendung einer Cyanamid-haltige Lösung nach mindestens einem der vorhergehenden Ansprüche als Mittel zur Förderung oder Regulierung des Pflanzenwachstums, insbesondere als Düngemittel oder als Pflanzenwachstumsregulator.

11. Verwendung eines nichtionischen Tensids enthaltend eine oder mehrere Verbindungen ausgewählt aus der Gruppe der Ethoxylate gemäß Formel (I), der Fettalkoholglucoside gemäß Formel (II) oder Mischungen hiervon, zur Stabilisierung von Cyanamid-haltigen Lösungen, wobei für Formel (I) und (II) gilt,
R¹-O-(CH₂CH₂O)ₙ-H Formel (I) 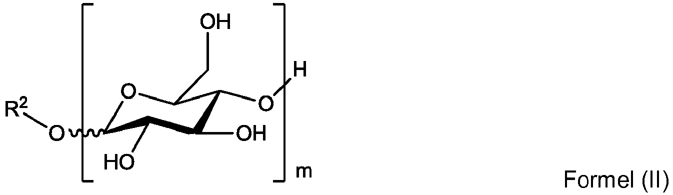
wobei für die Reste R¹, R² und die Indizes n, m gleichzeitig oder unabhängig gilt:
R¹ = eine lineare oder verzweigte Alkyl- oder Alkenylgruppe mit 6 bis 24 Kohlenstoffatomen, eine partiell oder vollständig fluorierte Alkylgruppe mit 6 bis 18 Kohlenstoffatomen, eine Phenylgruppe, eine alkylsubstituierte Phenylgruppe, eine ein- oder mehrfunktionelle Siloxangruppe,
R² = eine lineare oder verzweigte Alkyl- oder Alkenylgruppe mit 6 bis 24 Kohlenstoffatomen,
n = eine Zahl von 2 bis 20,
m = eine Zahl von 1 bis 5.

## Claims

1. Cyanamide-containing solution comprising
a) 15 to 60 wt.% cyanamide,
b) 0.01 to 4 wt.% of a stabiliser containing one or more compounds from the group of phosphorus-containing acids or the salts thereof,
c) 0.01 to 4 wt.% of a non-ionic surfactant containing one or more compounds selected from the group of ethoxylates according to formula (I), the fatty alcohol glucosides according to formula (II), or mixtures thereof, wherein the following applies for formula (I) and formula (II),
R¹-O-(CH₂CH₂O)ₙ-H Formula (I) 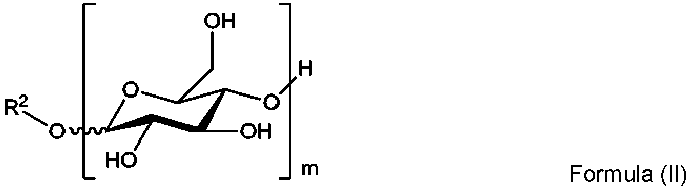
wherein the following applies for the functional groups R¹, R² and the indices n, m, simultaneously or independently:
R¹ = a linear or branched alkyl or alkenyl group having 6 to 24 carbon atoms, a partially or completely fluorinated alkyl group having 6 to 18 carbon atoms, a phenyl group, an alkyl-substituted phenyl group, a mono- or polyfunctional siloxane group,
R² = a linear or branched alkyl or alkenyl group having 6 to 24 carbon atoms,
n = a number from 2 to 20,
m = a number from 1 to 5,
d) remainder water,
wherein components a) and c) are present in a weight ratio of cyanamide to non-ionic surfactant in the range of 500:1 to 5:1.

2. Cyanamide-containing solution according to claim 1, **characterised in that** the cyanamide-containing solution comprises 30 to 60 wt.% cyanamide, in particular 35 to 52 wt.% cyanamide.

3. Cyanamide-containing solution according to either claim 1 or claim 2, **characterised in that** the cyanamide-containing solution comprises a compound selected from the group of ethoxylates according to formula (I) as the non-ionic surfactant, wherein the following applies for the functional group R¹ and the indices u, v, y and n:
R¹ = a linear or branched alkyl group having 8 to 18 carbon atoms, an alkyl-substituted phenyl group, a polyfunctional siloxane group according to formula (V), wherein the following applies for formula (V) 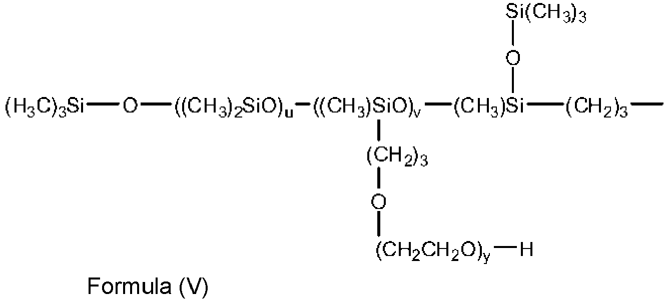
wherein the following applies for the indices u, v and y, independently of one another:
u = a number from 0 to 3 and
v = a number from 0 to 3,
y = a number from 2 to 10,
n = a number from 2 to 10.

4. Cyanamide-containing solution according to either claim 1 or claim 2, **characterised in that** the cyanamide-containing solution comprises a compound selected from the group of fatty alcohol glucosides according to formula (II) as the non-ionic surfactant, wherein the following applies for the functional group R² and the index m:
R² = a linear alkyl group having 8 to 18 carbon atoms,
m = a number from 2 to 5.

5. Cyanamide-containing solution according to at least one of the preceding claims, **characterised in that** the cyanamide-containing solution comprises one or more compounds from the group of orthophosphoric acid, ammonium dihydrogen phosphate, diammonium hydrogen phosphate, sodium dihydrogen phosphate, disodium hydrogen phosphate, potassium dihydrogen phosphate, dipotassium hydrogen phosphate or magnesium hydrogen phosphate as the stabiliser.

6. Cyanamide-containing solution according to at least one of the preceding claims, **characterised in that** the solution has a pH in the range of from 3.5 to 5.5, preferably in the range of from 3.9 to 4.5.

7. Cyanamide-containing solution according to at least one of the preceding claims, **characterised in that** the cyanamide-containing solution further comprises up to 6 wt.% dicyandiamide, in particular 0 to 6 wt.% dicyandiamide, in particular 0 to 2 wt.% dicyandiamide.

8. Cyanamide-containing solution according to at least one of the preceding claims, **characterised in that** the solution has a viscosity of less than 1 Pa*s (25°C).

9. Cyanamide-containing solution according to at least one of the preceding claims, **characterised in that** the cyanamide-containing solution further comprises up to 5 wt.% formulation auxiliaries, in particular 0 to 5 wt.% formulation auxiliaries, in particular 0 to 2 wt.% formulation auxiliaries.

10. Use of a cyanamide-containing solution according to at least one of the preceding claims as a means for promoting or regulating plant growth, in particular as a fertiliser or as a plant growth regulator.

11. Use of a non-ionic surfactant containing one or more compounds selected from the group of ethoxylates according to formula (I), fatty alcohol glucosides according to formula (II), or mixtures thereof, for stabilising cyanamide-containing solutions, wherein the following applies for formula (I) and formula (II),
R¹-O-(CH₂CH₂O)ₙ-H Formula (I) 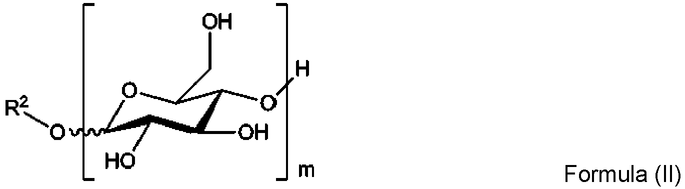
wherein the following applies for the functional groups R¹, R² and the indices n, m, simultaneously or independently:
R¹ = a linear or branched alkyl or alkenyl group having 6 to 24 carbon atoms, a partially or completely fluorinated alkyl group having 6 to 18 carbon atoms, a phenyl group, an alkyl-substituted phenyl group, a mono- or polyfunctional siloxane group,
R² = a linear or branched alkyl or alkenyl group having 6 to 24 carbon atoms,
n = a number from 2 to 20,
m = a number from 1 to 5.

## Revendications

1. Solution contenant de la cyanamide, comprenant
a) 15 à 60 % en poids de cyanamide,
b) 0,01 à 4 % en poids d'un stabilisateur comprenant un ou plusieurs composés choisis dans le groupe comprenant les acides contenant du phosphore ou leurs sels,
c) 0,01 à 4 % en poids d'un agent tensioactif non-ionique, comprenant un ou plusieurs composés choisis dans le groupe constitué par les éthoxylates selon la formule (I), les glucosides d'alcool gras selon la formule (II) ou leurs mélanges, les formules (I) et (II) étant les suivantes :
R¹-O-(CH₂CH₂O)ₙ-H ^ Formule (I) 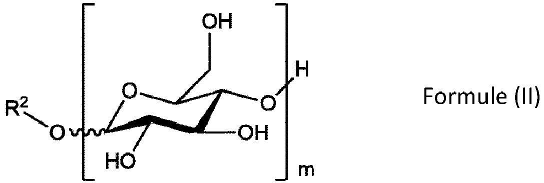
dans lesquelles il vaut pour les radicaux R¹, R² et les indices n, m simultanément ou indépendamment :
R¹ = un groupe alkyle ou alcényle linéaire ou ramifié ayant 6 à 24 atomes de carbone, un groupe alkyle partiellement ou totalement fluoré ayant 6 à 18 atomes de carbone, un groupe phényle, un groupe phényle substitué par un groupe alkyle, un groupe siloxane mono- ou polyfonctionnel,
R² = un groupe alkyle ou alcényle linéaire ou ramifié ayant 6 à 24 atomes de carbone,
n = un nombre de 2 à 20,
m = un nombre de 1 à 5,
d) le reste étant de l'eau,
les composants a) et c) étant présents dans un rapport pondéral de la cyanamide à l'agent tensioactif non ionique compris entre 500:1 et 5:1.

2. Solution contenant de la cyanamide selon la revendication 1, **caractérisée en ce que** la solution contenant de la cyanamide comprend 30 à 60 % en poids de cyanamide, en particulier 35 à 52 % en poids de cyanamide.

3. Solution contenant de la cyanamide selon les revendications 1 ou 2, **caractérisée en ce que** la solution contenant de la cyanamide contient, comme agent tensioactif non ionique, un composé choisi dans le groupe des éthoxylates selon la formule (I), dans laquelle il vaut pour le radical R¹ et les indices u, v, y et n :
R¹ = un groupe alkyle linéaire ou ramifié ayant 8 à 18 atomes de carbone, un groupe phényle substitué par un groupe alkyle, un groupe siloxane polyfonctionnel selon la formule (V), dans lequel il vaut pour la formule (V) : 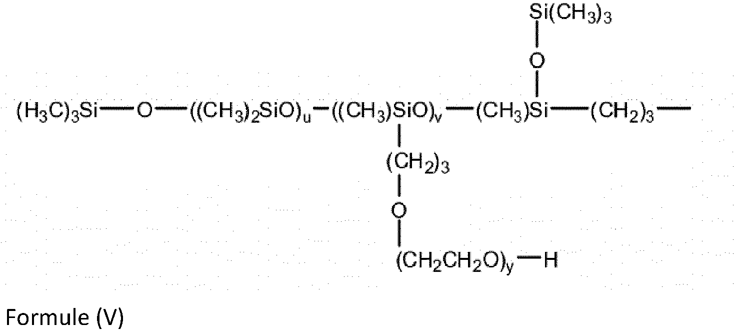
dans laquelle il vaut pour les indices u, v et y indépendamment :
u = un nombre de 0 à 3, et
v = un nombre de 0 à 3,
y = un nombre de 2 à 10,
n = un nombre de 2 à 10.

4. Solution contenant de la cyanamide selon les revendications 1 ou 2, **caractérisée en ce que** la solution contenant de la cyanamide comprend, en tant qu'agent tensioactif non ionique, un composé choisi dans le groupe des glucosides d'alcool gras selon la formule (II), dans laquelle il vaut pour le radical R² et l'indice m :
R²= un groupe alkyle linéaire ayant 8 à 18 atomes de carbone,
m = un nombre de 2 à 5.

5. Solution contenant de la cyanamide selon au moins une des revendications précédentes, **caractérisée en ce que** la solution contenant de la cyanamide comprend, comme stabilisateur, un ou plusieurs composés du groupe constitué par l'acide orthophosphorique, le dihydrogénophosphate d'ammonium, l'hydrogénophosphate de diammonium, le dihydrogénophosphate de sodium, l'hydrogénophosphate disodique, le dihydrogénophosphate de potassium, l'hydrogénophosphate dipotassique ou l'hydrogénophosphate de magnésium.

6. Solution contenant de la cyanamide selon au moins une des revendications précédentes, **caractérisée en ce que** la solution a un pH dans la gamme de 3,5 à 5,5, de préférence dans la gamme de 3,9 à 4,5.

7. Solution contenant de la cyanamide selon au moins une des revendications précédentes, **caractérisée en ce que** la solution contenant de la cyanamide comprend en outre jusqu'à 6 % en poids de dicyandiamide, en particulier 0 à 6 % en poids de dicyandiamide, en particulier 0 à 2 % en poids de dicyandiamide.

8. Solution contenant de la cyanamide selon au moins une des revendications précédentes, **caractérisée en ce que** la solution a une viscosité inférieure à 1 Pa*s (25 °C).

9. Solution contenant de la cyanamide selon au moins une des revendications précédentes, **caractérisée en ce que** la solution contenant des cyanamides comprend en outre jusqu'à 5 % en poids d'adjuvants de formulation, en particulier 0 à 5 % en poids d'adjuvants de formulation, en particulier 0 à 2 % en poids d'adjuvants de formulation.

10. Utilisation d'une solution contenant de la cyanamide selon au moins une des revendications précédentes comme agent pour promouvoir ou réguler la croissance des plantes, en particulier comme engrais ou comme régulateur de croissance des plantes.

11. Utilisation d'un agent tensioactif non ionique contenant un ou plusieurs composés choisis dans le groupe constitué par les éthoxylates selon la formule (I), les glucosides d'alcool gras selon la formule (II) ou leurs mélanges, pour la stabilisation de solutions contenant de la cyanamide, dans laquelle il vaut pour les formules (I) et (II)
R¹-O-(CH₂CH₂O)ₙ-H Formule (I) 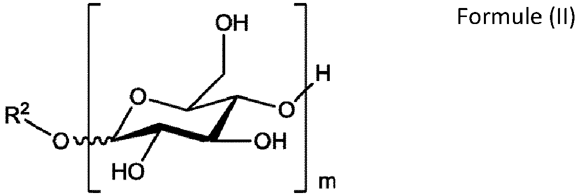
dans laquelle il vaut pour les radicaux R¹, R² et les indices n, m simultanément ou indépendamment :
R¹ = un groupe alkyle ou alcényle linéaire ou ramifié ayant 6 à 24 atomes de carbone, un groupe alkyle partiellement ou totalement fluoré ayant 6 à 18 atomes de carbone, un groupe phényle, un groupe phényle substitué par un groupe alkyle, un groupe siloxane mono- ou polyfonctionnel,
R²= un groupe alkyle ou alcényle linéaire ou ramifié ayant 6 à 24 atomes de carbone,
n = un nombre de 2 à 20,
m = un nombre de 1 à 5.
